# EUROPÄISCHE PATENTANMELDUNG

(11) **EP 4 403 885 A1**
(43) Veröffentlichungstag der Anmeldung: **24.07.2024**
(21) Anmeldenummer: 24153132.6
(22) Anmeldetag: 22.01.2024
(51) Int. Cl.: G01F 23/284, G01S 7/03

(54) **RADARSCHALTUNG FÜR EIN FÜLLSTANDMESSGERÄT**

(30) Priorität: 23.01.2023 DE 102023101550
(71) Anmelder: VEGA Grieshaber KG, 77709 Wolfach (DE)
(72) Erfinder: MÜLLER, Christoph, 77728 Oppenau (DE); WELLE, Roland, 77756 Hausach (DE); SCHULTHEIß, Daniel, 78132 Hornberg (DE)
(74) Vertreter: Maiwald GmbH

(57) **Zusammenfassung**

Radarschaltung für ein Füllstandmessgerät, aufweisend einen ersten anwendungsspezifischen integrierten Schaltkreis und einen zweiten anwendungsspezifischen integrierten Schaltkreis, welche unterschiedliche Strukturgrößen und/oder unterschiedliche Halbleitertechnologien aufweisen.

## Beschreibung

### Bezugnahme auf verwandte Anmeldungen

Die vorliegende Anmeldung beansprucht die Priorität der deutschen Patentanmeldung Nr. 10 2023 101 550.8, eingereicht am 23. Januar 2023, die in vollem Umfang durch Bezugnahme in das vorliegende Dokument aufgenommen wird.

### Gebiet der Erfindung

Die vorliegende Erfindung betrifft die Messgerätetechnik für die Prozessautomatisierung im industriellen oder privaten Umfeld. Insbesondere betrifft die Erfindung eine Radarschaltung für ein Füllstandmessgerät, eine Verwendung einer solchen Radarschaltung sowie ein Radarfüllstandmessgerät mit einer Radarschaltung.

### Technischer Hintergrund

In der Prozessmesstechnik im industriellen oder privaten Umfeld werden Messgeräte mit Radarprozessoren verwendet, welche zur Füllstandmessung oder zur Objektüberwachung eingesetzt werden können. Derartige Messgeräte senden ein Radarmesssignal aus, welches beispielsweise von einer Füllgutoberfläche reflektiert und zum Messgerät zurückgestrahlt wird. Aus dem empfangenen, reflektierten Radarmesssignal kann der Füllstand bestimmt werden. Auch können derartige Radarprozessoren für Messgeräte ausgeführt sein, welche als Reflexionsmikrowellenschranke bezeichnet werden. Diese detektieren, ob sich ein Objekt im Strahlengang befindet oder nicht.

Die Energieversorgung der eingesetzten Messgeräte ist oft deutlich eingeschränkt, da diese beispielsweise an eine 4 bis 20 mA-Zweidrahtleitung angeschlossen oder autark ausgeführt sind und ohne externe Energieversorgung arbeiten.

Insbesondere besteht ein Spannungsverhältnis zwischen der Genauigkeit der Messung und ihrer Häufigkeit auf der einen Seite und dem Energiebedarf sowie der Lebensdauer des Messgeräts auf der anderen Seite.

### Zusammenfassung

Es ist eine Aufgabe der vorliegenden Erfindung, einen energieeffizient arbeitenden Radarprozessor für ein Messgerät bereitzustellen, mit dem eine hohe Messgenauigkeit bei geringem Energieverbrauch bereitgestellt werden kann.

Ein erster Aspekt der vorliegenden Offenbarung betrifft eine Radarschaltung für ein Füllstandmessgerät, die einen ersten und einen zweiten anwendungsspezifischen integrierten Schaltkreis (ASIC) aufweist. Der erste ASIC weist eine erste Strukturgröße auf und/oder ist in einer ersten Halbleitertechnologie gefertigt. Der zweite ASIC hingegen weist eine zweite Strukturgröße auf und/oder ist in einer zweiten Halbleitertechnologie gefertigt. Die erste Strukturgröße ist unterschiedlich zu der zweiten Strukturgröße und/oder die erste Halbleitertechnologie ist unterschiedlich zu der zweiten Halbleitertechnologie.

Auf diese Weise ist es möglich, die Prozessierung und den Betrieb der beiden ASICs auf die Erfordernisse anzupassen, die sie erfüllen müssen. So kann beispielsweise der erste (oder der zweite) ASIC für Steuerungs- und Messwertberechnungsaufgaben eingesetzt werden, wohingegen der zweite (oder der erste) ASIC zur Erzeugung des Radarmesssignals eingerichtet ist. Diese beiden Aufgaben finden bei stark unterschiedlichen Arbeitsfrequenzen statt. So kann der zweite ASIC ausgeführt sein, dass er einen Arbeitsbereich von 6 GHz, 24 GHz, 60 GHz, 80 GHz, 120 GHz, 180 GHz oder 240 GHz oder darüber aufweist. Insbesondere kann vorgesehen sein, dass der erste ASIC und der zweite ASIC die Bauteile unter sich aufteilen, die für die Abarbeitung der Messaufgabe erforderlich sind. So kann der erste ASIC insbesondere eine PLL aufweisen, der zweite ASIC hingegen ist für die Erzeugung des Radarmesssignals zuständig.

Insbesondere kann der zweite ASIC ein MMIC (Monolithic Microwave Integrated Circuit) sein.

Der erste ASIC hingegen kann einen Arbeitsbereich im Megahertzbereich aufweisen, beispielsweise bei 40 MHz.

Insbesondere kann vorgesehen sein, dass die Strukturgröße des ersten (oder des zweiten) ASICs kleiner ist als 50 nm, wohingegen die Strukturgröße des zweiten (oder des ersten) ASICs deutlich größer ausfallen kann, beispielsweise 130 nm.

Gemäß einer Ausführungsform der vorliegenden Offenbarung sind der erste ASIC und der zweite ASIC übereinandergestapelt oder einander überlappend angeordnet.

Beispielsweise ist der erste ASIC auf Trägerplatte angeordnet, wohingegen der zweite ASIC auf dem ersten ASIC angeordnet ist.

Der zweite ASIC kann auf oder in einer Aussparung der Trägerplatte angeordnet sein, wobei der erste ASIC auf dem zweiten ASIC angeordnet ist.

Gemäß einer Ausführungsform weist der erste ASIC auf seiner Oberseite eine Metallisierung als Reflektor auf, um die von dem zweiten ASIC erzeugten Radarmesssignale zu reflektieren und somit in eine andere Richtung zu lenken, hin zum Füllgut.

Gemäß einer weiteren Ausführungsform weist die Trägerplatte unterhalb des ersten ASICs eine Metallisierung als Reflektor auf, um die von dem zweiten ASIC erzeugten Radarmesssignale zu reflektieren.

Gemäß einer weiteren Ausführungsform weist die Radarschaltung einen Primärstrahler auf, der eingerichtet ist zum Aussenden des von dem zweiten ASIC erzeugten Radarmesssignals, wobei der Primärstrahler auf dem zweiten ASIC oder auf der Trägerplatte angeordnet ist.

Gemäß einer weiteren Ausführungsform weist der erste ASIC eine Phasenregelschleife, PLL, eine Analog-Digital-Wandlerschaltung, ADC, einen endlichen Zustandsautomaten, FSM, und/oder eine digitale Schnittstelle zu einem Prozessor der Radarschaltung auf.

Gemäß einer weiteren Ausführungsform ist der erste ASIC eingerichtet, einen spannungsgesteuerten Oszillator, VCO, des zweiten ASICs und/oder einen Multiplier des zweiten ASICs zu versorgen.

Gemäß einer weiteren Ausführungsform sind der erste ASIC und der zweite ASIC separate Bauteile. Der zweite ASIC ist ein Radarchip, der eingerichtet ist zum Erzeugen eines Radarmesssignals, welches daraufhin von einer Antenne oder einem Strahlerelement abgestrahlt wird. Der oben angesprochene Prozessor ist eingerichtet zum Ermitteln eines Messwerts aus den empfangenen Radarsignalen. Die beiden ASICs sind über entsprechende Steuer- und Versorgungsleitungen miteinander verschaltet.

Der erste ASIC kann als Radar Companion ASIC ausgeführt sein, der Steueraufgaben und/oder Messwert-Erfassungsaufgaben in der Radarschaltung übernimmt. Somit können wesentliche Steuer- und Erfassungsaufgaben bei der Verwendung verschiedener Radarchips preisgünstig in einer kompakten Einheit vereint werden und gleichzeitig kann ein energieeffizienter Betrieb des entsprechenden Radarchips ermöglicht werden.

Unter dem Begriff "Prozessautomatisierung im industriellen Umfeld" kann ein Teilgebiet der Technik verstanden werden, welches Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation von Anlagen und die Logistikautomation von Lieferketten. Mit Hilfe von Distanz- und Winkelsensoren werden im Bereich der Logistikautomation Abläufe innerhalb oder außerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Gemäß einem weiteren Aspekt ist ein Radarfüllstandmessgerät mit einer oben und im Folgenden beschriebenen Radarschaltung angegeben.

Ein weiterer Aspekt der vorliegenden Offenbarung betrifft die Verwendung einer oben beschriebenen Radarschaltung in einem Radarfüllstandmessgerät.

Im Folgenden werden mit Verweis auf die Figuren Ausführungsformen der vorliegenden Offenbarung beschrieben. Werden in der folgenden Figurenbeschreibung die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt ein Schaltbild eines Radar MMIC mit einer Peripheriebeschaltung durch diskrete Komponenten.
Fig. 2 zeigt einen Radar Companion ASIC, welcher Steuerungs- und Erfassungsaufgaben beim Betrieb eines rein analogen MMIC übernehmen kann.
Fig. 3 zeigt den Aufbau einer Radarschaltung für ein Radarmessgerät mit dem ASIC der Fig. 2.
Fig. 4 verdeutlicht die universelle Nutzbarkeit des Radar Companion ASIC für vielfach verwendete Radar MMICs zur Füllstandmessung.
Fig. 5 zeigt eine laterale Aufbau- und Verbindungstechnik.
Fig. 6 zeigt eine Anordnung mit einem Primärstrahler oben auf den gestapelten ASICs.
Fig. 7 zeigt eine Anordnung mit einem Primärstrahler zwischen den ASICs.
Fig. 8 zeigt eine Anordnung mit einem Primärstrahler zwischen den ASICs.
Fig. 9 zeigt eine Anordnung mit einem Primärstrahler neben den gestapelten ASICs.
Fig. 10 zeigt eine Anordnung mit einem Primärstrahler auf einer Zwischenebene der gestapelten ASICs.
Fig. 11 zeigt eine Anordnung mit einem MMIC in einer Kavität der Trägerleiterplatte.
Fig. 12 zeigt eine Anordnung mit einem MMIC und einem RC ASIC in einer Tiefenkavität einer Multilayer-Trägerleiterplatte.
Fig. 13 zeigt ein Messgerät in Form eines Radarfüllstandmessgeräts.

### Detaillierte Beschreibung von Ausführungsformen

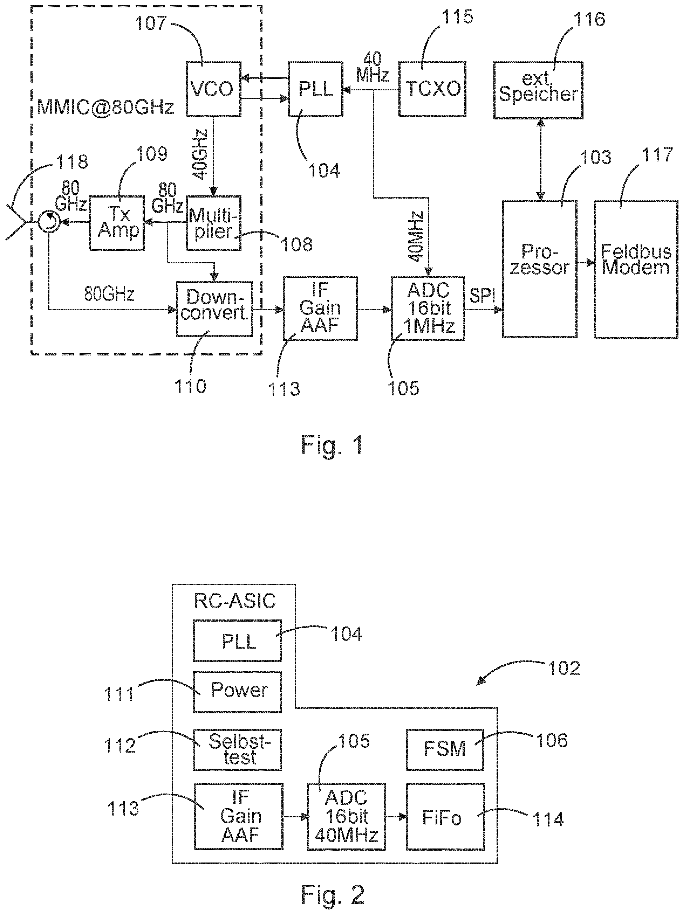

Fig. 1 zeigt einen Radar MMIC, mit einer Peripheriebeschaltung durch diskrete Komponenten. Der Radar MMIC erzeugt ein Radar-Messsignal von 80 GHz, das über die Antenne 118 in Richtung Füllgut abgestrahlt wird. Der MMIC weist einen spannungsgesteuerten Oszillator (VCO) 107 auf, der von einer externen PLL 104 angesteuert wird. Es ist ein TCXO-Oszillator 115 vorgesehen, der die PLL mit einer Frequenz von 40 MHz ansteuert. Der TCXO steuert auch die Analog-Digital-Wandlerschaltung 105 an.

Der MMIC weist neben dem VCO 107 einen Multiplier 108 auf, der vom VCO 107 bei 40 GHz angesteuert wird. Der Multiplier doppelt die Frequenz auf und steuert den TX Verstärker 109 an, der über eine Sende-/Empfangsweiche, beispielsweise einen Zirkulator mit der Antenne 118 verbunden ist. Darüber hinaus ist ein Abwärtskonverter 110 vorgesehen, der Signale vom Multiplier 108 und der Sende-/Empfangsweiche erhält.

Alle übrigen Komponenten befinden sich außerhalb des MMIC. Der Abwärtskonverter 110 gibt sein Signal an eine Verstärkungs- und Filterschaltung 113, welche es dann an den ADC 105 weiterreicht. Der ADC 105 ist über eine SPI Schnittstelle mit dem Prozessor 103 verbunden. Der Prozessor 103 kann Daten mit einem externen Speicher 116 austauschen. Darüber hinaus ist der Prozessor 103 mit einem Feldbusmodem 117 zur Messwertübertragung verbunden.

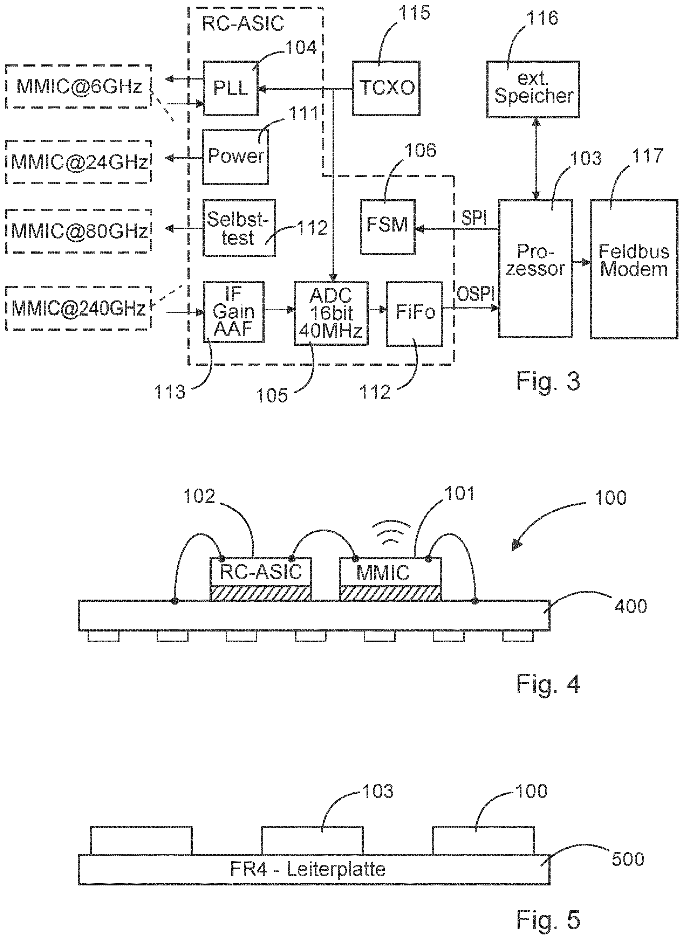

Fig. 2 zeigt einen Radar Companion ASIC 102, welcher Steuerungs- und Erfassungsaufgaben beim Betrieb eines rein analogen MMIC übernehmen kann. Der ASIC 102 weist eine Linearisierungsschaltung, beispielsweise eine ganzzahlig oder gebrochen rationale PLL 104, eine Energieversorgung 111, eine Selbsttestschaltung 112, eine Verstärkungs- und Filterschaltung 113 oder IF Gain AAF Schaltung 113, eine Analog-Digital-Konverterschaltung 104 (welche beispielsweise eingerichtet ist, analoge Signale mit einer Genauigkeit von 16 Bit und einer Abtastfrequenz von 40MHz in digitale Werte zu überführen), einen First-In-First-Out (FiFo) Speicher 114 und einen endlichen Zustandsautomaten 106 auf. Der ASIC 102 ist ein separates Bauteil, kann jedoch auf derselben Leiterplatte wie der MMIC 101 (s. Fig. 3) angeordnet sein. Fig. 3 zeigt den Aufbau einer Radarschaltung 100 für ein Radarmessgerät, die den oben beschriebenen ASIC 102 aufweist. Der ASIC 102 ist zwischen den Radarchip 101 und den Prozessor 103 geschaltet. Die Kommunikation zwischen ASIC 102 und Prozessor 103 erfolgt beispielsweise über die FiFo 114 mittels einer QSPI Schnittstelle und, ausgehend vom Prozessor 103, über eine SPI Schnittstelle zur FSM 106.

Der ASIC 102 kann den VCO 107 und den Multiplier 108 des MMIC 101 mit Energie versorgen und einen Selbsttest des MMIC 101 durchführen oder triggern (siehe Fig. 3). Insbesondere kann der RC-ASIC 102 zur Funktionsüberprüfung des MMIC 101 eingesetzt werden. Dies ist insbesondere für SIL Anwendungen von Vorteil. Es kann vorgesehen sein, dass der Prozessor 103 auf dem ASIC 102 integriert ist. Er kann aber auch, wie in Fig. 3 gezeigt, ein separates Bauteil sein.

Insbesondere können der MMIC 101 und der RC-ASIC 102 mittels unterschiedlicher Halbleitertechnologien und Chipmaterialien gefertigt sein. So kann der MMIC für die Anwendung bei hohen Frequenzen, beispielsweise 80 GHz oder darüber optimiert sein, wohingegen der RC-ASIC 102 für Anwendungen von deutlich niedrigeren Frequenzen, beispielsweise 40 MHz, optimiert ist. Dies kann im Vergleich zur Integration der ASIC-Baugruppe auf einem MMIC Energie sparen.

Fig. 3 zeigt die universelle Nutzbarkeit des RC-ASIC 102 für Radar MMICs zur Füllstandmessung, die für ganz unterschiedliche Frequenzbereiche ausgelegt sind, beispielsweise für 6 GHz, 24 GHz, 80 GHz,180 GHz und 240 GHz.

Fig. 4 zeigt eine laterale Aufbau- und Verbindungstechnik zur Bereitstellung einer Radarschaltung 100. Die Radarschaltung 100 weist eine Trägerplatte 400 auf, auf der ein erster anwendungsspezifischer integrierter Schaltkreis in Form eines RC ASICs 102 angeordnet ist. Daneben ist ein weiterer ASIC in Form eines MMIC 101 angeordnet. Die elektrische Verbindung zwischen den beiden ASICs 101, 102 und der Trägerplatte 400 kann mittels Bonddrähten erfolgen.

Die Trägerplatte 400 kann in Form einer Leiterplatte realisiert werden. Es kann auch vorgesehen sein, ein Glasmaterial, ein Keramikmaterial oder ein Halbleitermaterial als Trägerplatte 400 zu verwenden.

Die anwendungsspezifischen integrierten Schaltkreise 101, 102 weisen üblicherweise eine Backendschicht 401, 402 auf, die beispielsweise aus einem Halbleitermaterial gefertigt werden kann. Oberhalb der Backendschicht 401, 402 befinden sich üblicherweise eine oder mehrere strukturierte Schichten 403, 404, die die Funktion der Schaltkreise beinhalten. Eine Verbindung zu anderen Chips oder einer Trägerplatte 400 kann vorzugsweise - aber nicht ausschließlich - ausgehend von einer funktionalen Schicht 403, 404 aus hergestellt werden.

Fig. 5 zeigt das in der oberen Darstellung der Fig. 4 abgebildete Modul 100 auf einem Leiterplattensubstrat 500, beispielsweise einer FR4-Leiterplatte. Daneben ist der Prozessor 103 angeordnet sowie exemplarisch ein weiteres elektronisches Bauteil, beispielsweise ein Widerstand.

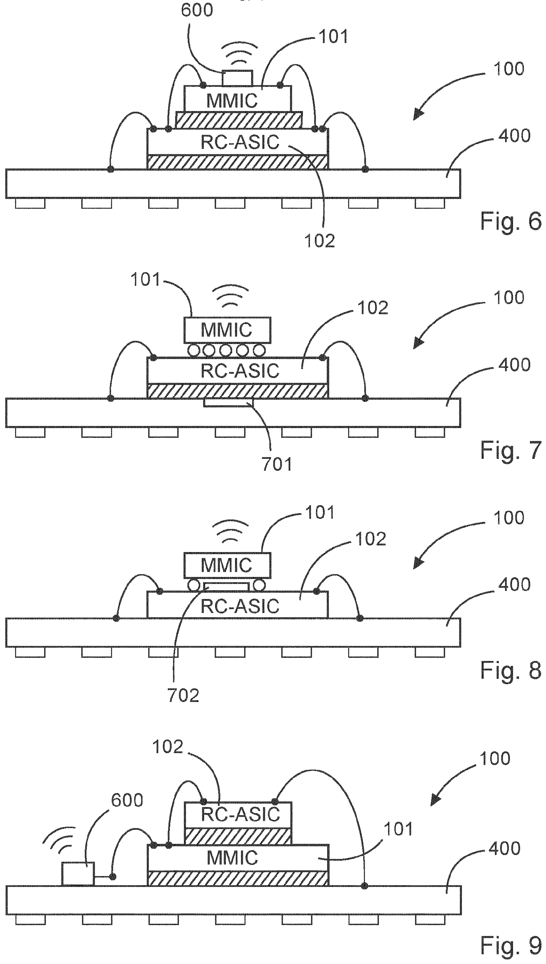

Fig. 6 zeigt eine Anordnung beziehungsweise Radarschaltung 100 mit einem Primärstrahler 600, der sich auf der Oberseite des MMIC 101 befindet. Zwischen dem MMIC 101 und der Trägerplatte 400 befindet sich der RC ASIC 102. Auch hier kann die elektrische Verbindung zwischen den einzelnen Bauteilen mittels Bondtechnik erfolgen.

Fig. 7 zeigt eine weitere Anordnung 100 mit einem Primärstrahler 600 (nicht dargestellt), der sich auf der Unterseite des zweiten ASICs 101 befindet, also zwischen den beiden ASICs 101, 102.

Auf dem Träger 400 oder in der Trägerplatte 400 befindet sich eine Metallisierung 701, die als Reflektor für das Radarmesssignal dient, das von dem auf der Unterseite des MMIC 101 befindlichen Primärstrahler 600 ausgesendet wird.

Fig. 8 zeigt eine Anordnung 100 mit dem Primärstrahler zwischen den beiden ASICs 101, 102. Auf der Oberseite des unteren, ersten ASICs 102 befindet sich eine Metallisierung 702 als Reflektor, und zwar in einem Abstand λ/2 zum Primärstrahler.

Fig. 9 zeigt eine Anordnung 100 mit dem Primärstrahler 600, der auf der Oberfläche der Trägerplatte 400 neben dem zweiten ASIC 101 angeordnet ist.

Der Primärstrahler 600 kann mittels Bondtechnik mit dem zweiten ASIC 101 verbunden sein.

Der zweite ASIC 101 befindet sich auf der Trägerplattenoberseite und darüber befindet sich der erste ASIC 102.

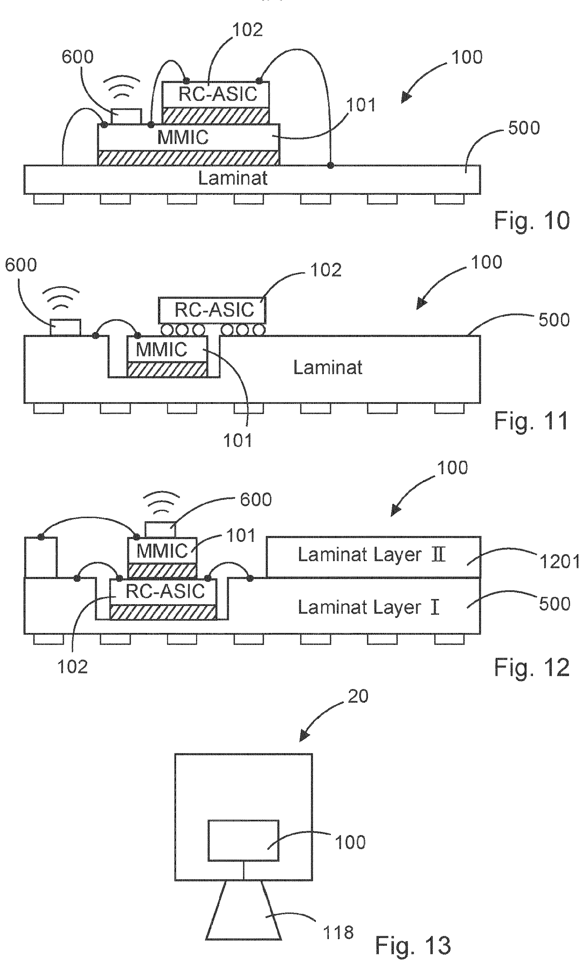

Fig. 10 zeigt eine Anordnung 100 mit dem Primärstrahler 600 auf einer Zwischenebene der gestapelten ASICs 101, 102, nämlich auf der Oberseite des zweiten ASICs 101. Ebenfalls auf der Oberseite des zweiten ASICs 101 ist der erste ASIC 102 angeordnet. Der Primärstrahler befindet sich daneben.

Fig. 11 zeigt eine Anordnung 100 mit einem MMIC beziehungsweise zweiten ASIC 101 in einer Kavität der Trägerleiterplatte 500. Der erste ASIC 102 befindet sich oberhalb des zweiten ASICs 101, jedoch etwas seitlich verschoben, so dass ein Teil von ihm auf dem Substrat 500 aufliegt. Ebenfalls auf der Oberseite des Substrats 500 ist der Primärstrahler 600 angeordnet.

Fig. 12 zeigt eine weitere Anordnung 100, bei der sowohl der erste ASIC 102 als auch der zweite ASIC 101 in einer tiefen Kavität einer Multilayer-Trägerleiterplatte 500 angeordnet sind. Hierbei befindet sich der erste ASIC 102 in einer Kavität der unteren Laminatschicht der zweischichtigen Trägerleiterplatte und darüber befindet sich der zweite ASIC 101.

Der untere ASIC 102 ist mittels Bonddrähten an Leitungen der unteren Laminatschicht angeschlossen und der obere ASIC 101 mit Bonddrähten an Leitungen der oberen Laminatschicht.

Fig. 13 zeigt ein Messgerät 20 in Form eines Radarfüllstandmessgeräts, das die oben beschriebene Radarschaltung und eine Füllstandradarantenne 118 zum Abstrahlen des Radarmesssignals und zum Empfangen des an der Füllgutoberfläche reflektierten Radarmesssignals aufweist.

Die in den Ansprüchen verwendeten Begriffe sollten so ausgelegt werden, dass sie die weitestmögliche vernünftige Interpretation in Übereinstimmung mit der vorstehenden Beschreibung erhalten. Zum Beispiel sollte die Verwendung des Artikels "ein" oder "der" bei der Einführung eines Elements nicht so ausgelegt werden, dass sie eine Vielzahl von Elementen ausschließt. Ebenso sollte die Erwähnung von "oder" so ausgelegt werden, dass sie eine Vielzahl von Elementen einschließt, so dass die Erwähnung von "A oder B" nicht "A und B" ausschließt, es sei denn, aus dem Kontext oder der vorangehenden Beschreibung geht klar hervor, dass nur eines von A und B gemeint ist. Ferner ist die Formulierung "mindestens eines von A, B und C" als eines oder mehrere Elemente aus einer Gruppe von Elementen zu verstehen, die aus A, B und C besteht, und nicht so auszulegen, dass mindestens eines von jedem der aufgeführten Elemente A, B und C erforderlich ist, unabhängig davon, ob A, B und C als Kategorien oder auf andere Weise miteinander verbunden sind. Darüber hinaus sollte die Erwähnung von "A, B und/oder C" oder "mindestens eines von A, B oder C" so ausgelegt werden, dass sie jede einzelne Einheit der aufgeführten Elemente, z. B. A, jede Teilmenge der aufgeführten Elemente, z. B. A und B, oder die gesamte Liste der Elemente A, B und C umfasst.

## Patentansprüche

1. Radarschaltung (100) für ein Füllstandmessgerät (20), aufweisend:
einen ersten anwendungsspezifischen integrierten Schaltkreis (102), ASIC;
einen zweiten ASIC (101);
wobei der erste ASIC (102) eine erste Strukturgröße aufweist und/oder in einer ersten Halbleitertechnologie gefertigt ist;
wobei der zweite ASIC (101) eine zweite Strukturgröße aufweist und/oder in einer zweite Halbleitertechnologie gefertigt ist;
wobei die erste Strukturgröße unterschiedlich ist zu der zweiten Strukturgröße; und/oder
wobei die erste Halbleitertechnologie unterschiedlich ist zu der zweiten Halbleitertechnologie.

2. Radarschaltung (100) nach Anspruch 1,
wobei der zweite ASIC (101) einen Arbeitsbereich von 6 GHz, 24 GHz, 60 GHz, 80 GHz, 120 GHz, 180 GHz oder 240 GHz, oder darüber aufweist.

3. Radarschaltung (100) nach Anspruch 1 oder 2,
wobei der zweite ASIC (101) ein MMIC, Monolithic Microwave Integrated Circuit, ist.

4. Radarschaltung (100) nach einem der vorhergehenden Ansprüche,
wobei der erste ASIC (102) einen Arbeitsbereich im Megaherzbereich aufweist.

5. Radarschaltung (100) nach einem der vorhergehenden Ansprüche,
wobei die erste Strukturgröße kleiner ist als 50 nm.

6. Radarschaltung (100) nach einem der vorhergehenden Ansprüche,
wobei der erste ASIC (102) und der zweite ASIC (101) übereinander, gestapelt oder einander überlappend angeordnet sind.

7. Radarschaltung (100) nach einem der vorhergehenden Ansprüche,
wobei der erste ASIC (102) auf eine Trägerplatte (400, 500) angeordnet ist,
wobei der zweite ASIC (101) auf dem ersten ASIC (102) angeordnet ist.

8. Radarschaltung (100) nach einem der Ansprüche 1 bis 6,
wobei der zweite ASIC (101) auf oder in einer Aussparung der Trägerplatte (400, 500) angeordnet ist,
wobei der erste ASIC (102) auf dem zweiten ASIC (101) angeordnet ist.

9. Radarschaltung (100) nach einem der vorhergehenden Ansprüche,
wobei der erste ASIC (102) auf seiner Oberseite eine Metallisierung (702) als Reflektor aufweist, um die von dem zweiten ASIC (101) erzeugen Radarmesssignale zu reflektieren.

10. Radarschaltung (100) nach einem der vorhergehenden Ansprüche,
wobei die Trägerplatte (400, 500) unterhalb des ersten ASIC (102) eine Metallisierung (701) als Reflektor aufweist, um die von dem zweiten ASIC (101) erzeugen Radarmesssignale zu reflektieren.

11. Radarschaltung (100) nach einem der vorhergehenden Ansprüche, aufweisend:
einen Primärstrahler (600), eingerichtet zum Aussenden des von dem zweiten ASIC (101) erzeugen Radarmesssignals, der auf dem zweiten ASIC oder auf der Trägerplatte (400, 500) angeordnet ist.

12. Radarschaltung (100) nach einem der vorhergehenden Ansprüche,
wobei der erste ASIC (102) eine Phasenregelschleife (104), PLL, eine Analog-Digital-Wandlerschaltung (105), ADC, einen endlichen Zustandsautomaten (106), FSM, und/oder eine digitale Schnittstelle zu einem Prozessor (103) der Radarschaltung aufweist.

13. Radarschaltung (100) nach einem der vorhergehenden Ansprüche,
wobei der erste ASIC (102) eingerichtet ist, einen spannungsgesteuerten Oszillator (107), VCO, des zweiten ASIC (101) und/oder einen Muliplier (108) des zweiten ASIC zu versorgen.

14. Radarschaltung (100) nach einem der vorhergehenden Ansprüche,
wobei der erste ASIC (102) und der zweite ASIC (101) separate Bauteile sind.

15. Verwendung einer Radarschaltung (100) nach einem der vorhergehenden Ansprüche in einem Radarfüllstandmessgerät (20).

16. Radarfüllstandmessgerät (20) mit einer Radarschaltung (100) nach einem der Ansprüche 1 bis 14.
